# EUROPÄISCHE PATENTANMELDUNG

(11) **EP 4 752 420 A2**
(43) Veröffentlichungstag der Anmeldung: **03.06.2026**
(21) Anmeldenummer: 26172811.7
(22) Anmeldetag: 08.10.2021
(51) Int. Cl.: F16L 37/088, F16L 37/34, B60L 58/26, H01M 10/613, H01M 10/625, H01M 10/6567, H01M 10/66

(54) **KUPPLUNGSANORDNUNG MIT VENTILEN**

(62) Teilanmeldung aus: 21201566.3
(71) Anmelder: Hanil Tube Corporation, Seo-gu Incheon 22744 (KR)
(72) Erfinder: Sung-Yong, Eom, 107-1006 Incheon (KR); Seong-Hwa, Choo, 407-053 Incheon (KR); Dong-Hyeo, Lee, Gyeonggi-do (KR); Barthel, Iris, 34270 Schauenburg (DE); Bube, Kay, 36277 Schenklengsfeld (DE); Häckel, Andre, 34513 Waldeck (DE); Polinski, Paul, 34121 Kassel (DE)
(74) Vertreter: Andrejewski - Honke Patent- und Rechtsanwälte Partnerschaft mbB

(57) **Zusammenfassung**

Eine Kupplungsbuchse (1) umfasst einen Buchsenkörper (3) und einen Rückhalter (7) zur Verriegelung eines Kupplungssteckers (2) in den Buchsenkörper (3). Der Buchsenkörper weist einen Verbindungsabschnitt (4) und einen Kupplungsabschnitt (6) auf, wobei der Verbindungsabschnitt (4) und der Kupplungsabschnitt (6) über einen Innenkanal (8) miteinander fluidisch verbunden sind. In dem Innenkanal (8) ist ein Buchsenventil (10a) angeordnet, wobei das Buchsenventil (10a) eine Ventilhalterung (11a), einen axial beweglichen Ventilkörper (12a) und einen Ventilsitz (13a) umfasst. Der Rückhalter (7) weist wenigstens ein Rastelement (25) auf, wobei das wenigstens eine Rastelement (25) federnd elastisch ausgebildet ist. Das wenigstens eine Rastelement (25) ist für einen Eingriff mit einem Kupplungsstecker (2) ausgebildet.

## Beschreibung

Die Erfindung betrifft eine Kupplungsbuchse zur fluidischen Kupplung mit einem Kupplungsstecker, wobei die Kupplungsbuchse einen Buchsenkörper umfasst, wobei der Buchsenkörper einen Verbindungsabschnitt zur Verbindung mit einem Rohr oder mit einem Aggregat und einen Kupplungsabschnitt zur Kupplung miteinem Kupplungsstecker umfasst, wobei die Kupplungsbuchse so ausgebildet ist, dass ein Kupplungsstecker in die Kupplungsbuchse einsteckbar ist, wobei die Kupplungsbuchse einen Rückhalter zur Verriegelung eines Kupplungssteckers in dem Buchsenkörper aufweist, wobei der Kupplungsabschnittund der Verbindungsabschnitt des Buchsenkörpers über einen Innenkanal miteinander fluidisch verbunden sind, wobei in dem Innenkanal ein Buchsenventil angeordnet ist, wobei das Buchsenventil eine Ventilhalterung, einen axial beweglichen Ventilkörper und einen Ventilsitz umfasst, wobei die Ventilhalterung und der Ventilsitz in axialer Richtung einen Ventilabschnitt des Buchsenkörpers bzw. der Kupplungsbuchse definieren, wobei die Kupplungsbuchse so ausgebildet ist, dass der Ventilkörper in einem gesperrten Zustand des Buchsenventils an dem Ventilsitz fluiddicht anliegt und in einem geöffneten Zustand des Buchsenventils nicht an dem Ventilsitz anliegt. Die Erfindung betrifft ferner einen Kupplungsstecker sowie eine Kupplungsanordnung umfassend eine Kupplungsbuchse und einen Kupplungsstecker.

Eine Kupplungsbuchse wie eingangs beschrieben ist aus DE 10 2004 026 209 B4 bekanntund dient dem Schließen des Fluidpfades während des Lösens der Kupplungsanordnung. Der Rückhalter ist als eine den Kupplungskörper umschließende, axial bewegliche und gefederte Hülse ausgestaltet, die um den Umfang der Kupplungsbuchse verteilte Verschlusskugeln sichert. Die Verschlusskugeln greifen zur Verriegelung in eine umlaufende Nut des Kupplungssteckers ein. Ein zur Kupplungsbuchse komplementär ausgebildeter Kupplungsstecker umfasst eine im Wesentlichen zylindrische Kuppelfläche, welche im eingerasteten Zustand des Kupplungssteckers in einem Dichtungsabschnitt der Kupplungsbuchse angeordnet ist. Der Dichtungsabschnitt weist eine Dichtung in Form eines Dichtungsringes auf, welcher mit Hilfe einer Nut auf der Innenseite des Buchsenkörpers in dem Dichtungsabschnitt gehalten wird. Die Kuppelfläche des Kupplungssteckers und der Dichtungsring der Kupplungsbuchse sind so dimensioniert, dass eine fluiddichte Kupplung von Kupplungsstecker und Kupplungsbuchse erzielt wird.

Der Buchsenkörper aus DE 10 2004 026 209 B4 umfasst zwei separat ausgebildete Buchsenkörperteile, und zwar ein axial einwärtiges Zwischenstück und ein axial auswärtiges Hauptstück. Das Zwischenstück und das Hauptstück sind mittels einer Gewindeverbindung sowie eines Dichtungsrings fluiddicht miteinander verbunden. Ein axial einwärtiger Endabschnitt des Zwischenstücks bildet den Verbindungsabschnitt für ein Rohr, während das axial auswärtige Ende die Ventilhalterung, eine Ventilführung, ein Rückstellelement sowie den Ventilkörper trägt. Der Ventilkörper des Zwischenstücks reicht weit in das Hauptstück hinein und schlägt dort an dem Ventilsitz an. Somit ist die Kupplungsbuchse so ausgebildet, dass die Ventilhalterung und der Ventilkörper in axial auswärtiger Richtung in die Kupplungsbuchse einsetzbar bzw. eingesetzt sind. Der Ventilsitz hingegen ist integraler Bestandteil des Buchsenkörpers bzw. des Hauptstücks. Der Kupplungsstecker bzw. dessen Steckerkörper ist analog zum Buchsenkörper ausgebildet und umfasst ebenfalls ein Haupt- sowie ein Zwischenstück und ist gleichsam mit einem Ventil, dem Steckerventil, ausgestattet. Die Zweiteiligkeit des Buchsenkörpers bzw. Steckerkörpers dient dazu, die innenliegende Ventilhalterung einfacher herzustellen und ist Kerngedanke von DE 10 2004 026 209 B4.

Nachteilig an der bekannten Kupplungsbuchse und an dem bekannten Kupplungsstecker aus DE 10 2004 026 209 B4 ist, dass beim Schließen und Lösen der Kupplungsanordnung eine Hand den Kupplungsstecker und die andere Hand die Kupplungsbuchse halten muss, während zugleich die Hülse entgegen der Federkraft zurückgeschoben werden muss. Insoweit ist die bekannte Kupplungsanordnung bezüglich der Handhabung etwas umständlich, was insbesondere im verengten Bauraum eines Kraftfahrzeuges ins Gewicht fällt. Dort ist oft nur Platz für eine Hand vorgesehen. Der Erfindung liegt daher die Aufgabe zugrunde, eine Kupplungsbuchse und einen Kupplungsstecker zu schaffen, welche fluiddicht voneinander gelöst werden können und gleichzeitig einen möglichst geringen Montageaufwand verursachen.

Diese Aufgabe wird gelöst durch eine Kupplungsbuchse zur fluidischen Kupplung mit einem Kupplungsstecker, wobei die Kupplungsbuchse einen Buchsenkörper umfasst, wobei der Buchsenkörpereinen Verbindungsabschnitt zur Verbindung miteinem Rohr oder mit einem Aggregat und einen Kupplungsabschnitt zur Kupplung mit einem Kupplungsstecker umfasst, wobei die Kupplungsbuchse so ausgebildet ist, dass ein Kupplungsstecker in die Kupplungsbuchse einsteckbar ist, wobei die Kupplungsbuchse einen Rückhalter zur Verriegelung eines Kupplungssteckers in dem Buchsenkörper aufweist, wobei der Kupplungsabschnitt und der Verbindungsabschnitt des Buchsenkörpers über einen Innenkanal miteinander fluidisch verbunden sind, wobei der dem Kupplungsabschnitt zugeordnete Abschnitt des Innenkanals in einem Längsschnitt der Kupplungsbuchse eine Mittenachse sowie eine axiale und eine radiale Richtung sowie eine Umlaufrichtung definiert, wobei der Kupplungsabschnitt in axial auswärtiger Richtung von einer Kupplungsöffnung abgeschlossen wird, wobei in dem Innenkanal ein Buchsenventil angeordnet ist, wobei das Buchsenventil eine Ventilhalterung, einen axial beweglichen Ventilkörper und einen Ventilsitz umfasst, wobei die Ventilhalterung und der Ventilsitz in axialer Richtung einen Ventilabschnitt des Buchsenkörpers bzw. der Kupplungsbuchse definieren, wobei die Kupplungsbuchse so ausgebildet ist, dass der Ventilkörper in einem gesperrten Zustand des Buchsenventils an dem Ventilsitz fluiddicht anliegt und in einem geöffneten Zustand des Buchsenventils nicht an dem Ventilsitz anliegt, wobei der Rückhalter wenigstens ein Rastelement umfasst, wobei das wenigstens eine Rastelement federnd elastisch ausgebildet ist, wobei das wenigstens eine Rastelement für einen Eingriff mit einem Kupplungsstecker ausgebildet ist.

Der Erfindung liegt die Erkenntnis zugrunde, dass der Verriegelungsmechanismus aus DE 10 2004 026 209 B4 nachteilig in der Handhabung ausgebildet ist. Es wurde gefunden, dass dieser Nachteil beseitigt werden kann, wenn das wenigstens eine Rastelement federnd elastisch ausgebildet ist, wobei das wenigstens eine Rastelement für einen Eingriff mit einem Kupplungsstecker ausgebildet ist. Folglich ist die Erfindung dadurch gekennzeichnet, dass das wenigstens eine Rastelementzugleich die Funktionen der Verriegelung und der Rückstellung in sich vereint. Hierdurch ist es möglich, dass der Kupplungsstecker beim Einführen in die Kupplungsbuchse das wenigstens eine, elastisch deformierbare Rastelement derart elastisch deformiert, dass dieses in sich eine Rückstellenergie speichert und zugleich den Weg freigibt für den Kupplungsstecker. Hierdurch entfällt die Notwendigkeit einer Feder, wie sie in DE 10 2004 026 209 B4 offenbart ist, weil deren Funktion in dem Rastelement selbst verwirklicht ist. In der Folge ist es auch nicht mehr notwendig, die Hülse zurückzuziehen, wodurch sich die Handhabung vereinfacht. Insbesondere ist es damit möglich, die Kupplungsbuchse oder den Kupplungsstecker - bei Fixierung des jeweils anderen Kupplungselements - einhändig mit dem jeweils anderen Kupplungselementzu verbinden. Durch das bloße axiale Zusammenführen der beiden Kupplungselemente der Kupplungsanordnung wird die Verriegelung des Kupplungssteckers in der Kupplungsbuchse automatisch erzielt, wodurch die eingangs genannte Aufgabe gelöst wird.

In DE 10 2004 026 209 B4 sind das Zwischenstück und das Hauptstück des Buchsenkörpers über eine Gewindeverbindung miteinander verbunden. Hierzu weist das Zwischenstück ein Hexagonalteil auf, welches mit einem Werkzeug - etwa einem Maulschlüssel oder einer Nuss - erfasst werden kann, um das Zwischenstück fest anzuziehen. Sowohl das Gewinde als auch das Hexagonalteil signalisieren, dass das Zwischenstück und das Hauptstück aus Stahl hergestellt sind. Hierzu passen die Verschlusskugeln, die gleichsam der Kupplungsbuchse eine sehr stabile Gestalt und ein sehr hochwertiges Erscheinungsbild verleihen. Derartige Produkte sind insbesondere für den Bereich der Labor-, Werks- und Werkstattausstattung und dergleichen von Vorteil, bei denen professionell agierende Personen häufig mit Fluidkupplungen arbeiten. Als Beispiel mögen Fluidkupplungen für hydraulische oder pneumatische Werkzeuge dienen. Fluidkupplungen in diesen Räumlichkeiten sind regelmäßig nicht den extrem beengten Verhältnissen in Motorräumen ausgesetzt, sodass das Problem der Kompaktheit bzw. der vereinfachten Handhabung sich ausgehend von DE 10 2004 026 209 B4 gar nicht erst stellt. Außerdem bedarf es bei Kraftfahrzeugen nichtderartig auf ein hochwertiges Erscheinungsbild getrimmte Kupplungsanordnungen. Würde hingegen die eingangs beschriebene Kupplungsanordnung aus Kunststoff hergestellt, so ließen sich die Rastelemente zwar deutlich besser herstellen, doch würde sich dadurch zugleich das Erscheinungsbild aus Sicht der professionellen Nutzer in Laboren und Werkstätten in qualitativer Hinsicht verschlechtern. Der Verriegelungsmechanismus des eingangs genannten Stands der Technik ist daher gut auf den Rest der Kupplungsanordnung abgestimmt.

Die Begriffe "Buchse" und "Stecker" sind zweckmäßigerweise komplementär zu verstehen. Der Ausdruck "komplementär" meint vorzugsweise, dass der Kupplungsstecker fluiddicht in die Kupplungsbuchse einsteckbar ist. Der Ausdruck "Rohr" meint bevorzugtermaßen starre und weniger starre Fluidleitungen, so dass hiervon beispielsweise auch Schläuche mit umfasst sind. Das Wort "Aggregat" meint vorzugsweise andere Fluidkomponenten als Fluidleitungen und damit beispielsweise Tanks, Pumpen, Einspritzdüsen und dergleichen.

Der Ausdruck "axial auswärtig" meint vorteilhafterweise die axiale Richtung des jeweiligen Abschnittes der Kupplungsbuchse bzw. des Kupplungssteckers auf die Kupplungsöffnung der Kupplungsbuchse bzw. die Kuppelöffnung des Kupplungssteckers hin. Die Begriffe "einwärtig" bzw. "einwärts" meinen folglich die jeweilige axiale Richtung auf das Stirnende des Verbindungabschnittes der Kupplungsbuchse hin. Im Falle des Kupplungssteckers ist mit "axial einwärts" die Richtung hin zu einem Stirnende des Anschlussabschnittes des Kupplungssteckers gemeint.

Der Ausdruck "verriegelter Zustand" meint vorzugsweise einen Zustand der Kupplungsanordnung, bei welchem der Rückhalter der Kupplungsbuchse in Eingriff mit einem Verriegelungselement des Kupplungssteckers gelangt ist. Ein gelöster Zustand der Kupplungsanordnung liegt zweckmäßigerweise dann vor, wenn kein verriegelter Zustand vorliegt.

Es ist besonders bevorzugt, dass die Kupplungsbuchse eine Dichtung umfasst, wobei die Dichtung vorzugsweise als Dichtungsring ausgebildet ist. Die Dichtung bzw. der Dichtungsring umfasst vorzugsweise ein Elastomer. Vorteilhafterweise ist die Dichtung bzw. der Dichtungsring auf einer dem Innenkanal zugewandten Innenseite des Buchsenkörpers angeordnet. Mit Vorteil wird die Dichtung bzw. der Dichtungsring in einer Nut auf der Innenseite des Buchsenkörpers gehalten. Es ist möglich, dass die Nut auf der Innenseite des Buchsenkörpers durch eine nach radial innen ragende Schulter gebildet wird. Es ist von Vorteil, dass ein Dichtungshalter, insbesondere in Form eines Dichtungshalterringes, in den Buchsenkörper eingesetzt ist und eine der Schulter gegenüberliegende Wand der Dichtungsnut bildet. Der Dichtungsring ist in axialer Richtung vorzugsweise zwischen dem Ventilsitz und dem Rückhalter angeordnet. Es ist sehr bevorzugt, dass ein Dichtungsabschnitt durch die von dem Dichtungshalter und dem Ventilsitz aufgespannte axiale Ausdehnung einen Dichtungsabschnitt definiert wird. Vorzugsweise ist der Dichtungsabschnitt zwischen dem Kupplungsabschnitt und dem Ventilabschnitt des Buchsenkörpers angeordnet ist.

Vorzugsweise ist die Kupplungsbuchse bzw. der Kupplungsstecker so ausgebildet, dass die Ventilhalterung und/oder der Ventilkörperund/oderder Ventilsitz in axial einwärtiger Richtung in den Buchsenkörper/Steckerkörper eingesetzt ist/sind. Dem liegt zunächst die Erkenntnis zugrunde, dass die Zweiteiligkeit des Buchsenkörpers bzw. Steckerkörpers Aufwand verursacht, weil die beiden Teile separat hergestellt werden müssen und folglich - bei der bevorzugten Verwendung von Kunststoff - zwei Spritzgusswerkzeuge erfordern. Außerdem erfordert die fluiddichte Verbindung sehr geringe Toleranzen, was ebenfalls Aufwand nach sich zieht. Dann müssten die beiden Teile miteinander verschweißt oder aber miteinander verrastet und zusätzlich per Dichtungsring abgedichtet werden. Es wurde gefunden, dass dieser Aufwand verringert wird, indem das Ventil aus der entgegengesetzten Richtung und damit in axial einwärtiger Richtung in den Buchsenkörper/Steckerkörper eingesetzt wird. Hierdurch wird der Aufwand entscheidend verringert. Insbesondere wurde gefunden, dass die Aufwandsverringerung durch die bevorzugte Einteiligkeit des Buchsenkörpers bzw. Steckerkörpers größer ist als der Aufwand, der durch das Einsetzen eines separaten Ventilsitzes entsteht. Denn wenn derVentilkörper in axial einwärtiger Richtung eingesetzt werden und gleichzeitig nach axial außen abdichten soll, so ist sehr bevorzugt, dass der Ventilsitz erst nach dem Ventilkörper eingesetzt wird. Wäre der Ventilsitz bereits vorher eingesetzt oder aber sogar integral mit dem Buchsenkörper/Steckerkörper ausgebildet, so wäre der Ventilkörper nicht oder nur mit großem Aufwand durch den Ventilsitz an seinen vorgesehenen Platz zu bringen. Durch das Einsetzen des Buchsenventils bzw. des Steckerventils in axial einwärtiger Richtung lässt sich damit eine Kupplungsanordnung schaffen, welche fluiddicht gelöst werden kann und welche gleichzeitig einen geringeren Herstellungsaufwand nach sich zieht.

Gemäß einer Ausführungsform ist der Buchsenkörper/Steckerkörper einstückig und besonders bevorzugt integral ausgebildet. Der Begriff "einstückig" meint vorzugsweise einen Buchsenkörper bzw. Steckerkörper, welcher lediglich irreversibel und damit nur beschädigend in mehrere Teile zerlegt werden kann. Beispielsweise stellt eine geschweißte Verbindung von zwei Kunststoffteilen eine irreversible Verbindung und damit ein einstückiges Element dar. Der Begriff "integral" meint insbesondere solche Elemente, welche aus einem einzigen Spritzguss mit einem einzigen Material gefertigt sind. Es ist besonders bevorzugt, dass der Buchsenkörper bzw. Steckerkörper Kunststoff umfasst und vorzugsweise lediglich Kunststoff umfasst.

Es ist möglich, dass der Buchsenkörper bzw. Steckerkörper mehrstückig ausgestaltet ist und wenigstens zwei Buchsenkörperteile bzw. Steckerkörperteile bzw. ein Hauptstück und ein Zwischenstück aufweist. So ist es bei bestimmten Fluidsystemen von Vorteil, dass das Hauptstück mit mehreren Varianten des Zwischenstückes kombinierbar ist. Die beiden Buchsenkörperteile/ Steckerkörperteile können irreversibel per Schweißung miteinander verbunden sein. Die wenigstens zwei Buchsenkörperteile/Steckerkörperteile können gemäß einer Ausführungsform mittels Rastverbindung oder mittels Kraftschluss mechanisch miteinander verbunden werden und bevorzugt über wenigstens einen Dichtungsring an der Verbindungsstelle fluidisch abgedichtet werden.

Der Buchsenkörper kann gewinkelt oder gerade ausgebildet sein. Unter einem gerade ausgebildeten Buchsenkörper wird vorzugsweise verstanden, dass die Mittenachse des Kupplungsabschnittes konzentrisch bzw. identisch mit einer Längsachse des Verbindungsabschnittes ist. Unter dem Ausdruck "gewinkelter Buchsenkörper" wird zweckmäßigerweise verstanden, dass die Längsachse des Verbindungsabschnittes in einem Längsschnitt des Buchsenkörpers relativ zu einer Mittenachse des Kupplungsabschnittes gewinkelt verläuft. Es ist sehr bevorzugt, dass der Buchsenkörper dem VDA-Standard oder dem SAE-Standard für Fluidkupplungen entspricht.

Es ist besonders bevorzugt, dass der Ventilsitz ein separat von dem Buchsenkörper hergestelltes Bauteil ist. Zweckmäßigerweise ist der Ventilsitz nicht integral mit dem Buchsenkörper ausgebildet. Vorzugsweise umfasst der Ventilsitz einen Kunststoff und weiter vorzugsweise lediglich Kunststoff. Besonders vorzugsweise ist der Ventilsitz ringförmig und weiter vorzugsweise kreisringförmig ausgebildet. Der Ventilsitz kann mittels Kraftschluss und/oder Formschluss und/oder Stoffschluss in den Buchsenkörper eingesetzt sein. Mit Vorteil ist der Ventilsitz in den Buchsenkörper eingerastet oder eingeklemmt. Es ist sehr vorteilhaft, dass der Buchsenkörper eine radial nach innen ragende Protrusion aufweist, an welche der Ventilsitz beim Einsetzen in den Buchsenkörper in axial einwärtiger Richtung anschlägt. Es ist sehr bevorzugt, dass der Ventilsitz an der radial nach innen ragenden Protrusion anliegt und vorzugsweise an dieser angeschlossen bzw. befestigt ist. Zweckmäßigerweise definiert die Protrusion die axiale Position des Ventilsitzes. Es ist von Vorteil, dass der Ventilsitz in axialer Richtung zwischen der Ventilhalterung und der Dichtung bzw. dem Dichtungsring an geordnet ist. Die Wirkung der separaten Herstellung des Ventilsitzes relativ zum Buchsenkörper besteht darin, dass dann der Ventilsitz nachträglich in den Buchsenkörper eingesetzt werden kann. Hierdurch ist es möglich, dass zunächst die restlichen Ventilkomponenten von der Kupplungsöffnung kommend in den Ventilabschnitt des Buchsenkörpers eingesetzt werden, um anschließend bzw. abschließend den Ventilsitz in den Buchsenkörper einzusetzen. Hierdurch muss das Buchsenventil nicht vom Verbindungsabschnitt her kommend in den Buchsenkörper eingesetzt werden, so dass der Buchsenkörper insgesamt als einstückiges und sogar auch als integrales Teil hergestelltwerden kann. Dies gewährleistet einen geringeren Herstellungsaufwand bei der Herstellung des Buchsenkörpers sowie außerdem eine größere Stabilität und letztlich auch Fluiddichtigkeit der Kupplungsbuchse.

Besonders vorzugsweise umfasst der Buchsenkörper bzw. Steckerkörper einen radial nach innen ragenden Vorsprung, an welchem die Ventilhalterung angeschlossen bzw. befestigt ist. Es ist sehr bevorzugt, dass die Ventilhalterung separat zum Buchsenkörper bzw. Steckerkörper ausgebildet ist. Mit Vorteil umfasst die Ventilhalterung einen Kunststoff und vorzugsweise lediglich Kunststoff. Es ist sehr vorteilhaft, dass die Ventilhalterung in axial einwärtiger Richtung an dem Vorsprung anschlägt bzw. anliegt. Vorteilhafterweise wird die Ventilhalterung mittels Kraftschluss und/oder Formschluss und/oder Stoffschluss an dem Vorsprung angeschlossen bzw. befestigt. Als formschlüssige Befestigung kommt insbesondere ein Verrasten in Betracht. Eine kraftschlüssige Verbindung mag beispielsweise durch einen radial wirkenden Presssitz erreicht werden. Als Stoffschluss kommt vor allem Schweißen - insbesondere Laserschweißen - in Betracht. Die Wirkung der separaten Herstellung der Ventilhalterung relativ zum Buchsenkörper bzw. Steckerkörper besteht darin, dass der Spritzguss des Buchsenkörpers bzw. Steckerkörpers erheblich vereinfacht wird. Außerdem kann dann die Ventilführung bereits außerhalb des Buchsenkörpers bzw. Steckerkörpers in die Ventilhalterung eingesetzt werden, so dass die Montage an dieser Stelle etwas vereinfacht wird.

Mit Vorteil weist die Ventilhalterung des Buchsenkörpers bzw. Steckerkörpers einen Führungsdurchgang auf. Der Führungsdurchgang ist vorzugsweise in einem radial inneren Bereich der Ventilhalterung angeordnet. Zweckmäßigerweise ist der Führungsdurchgang so ausgebildet, dass die Ventilführung bzw. der Führungsfuß der Ventilführung in axialer Richtung durch den Führungsdurchgang hindurchgleiten kann. Zweckmäßigerweise umfasst die Ventilhalterung einen Ring, welcher vorzugsweise in einem radial äußeren Bereich der Ventilhalterung angeordnet ist. Es ist bevorzugt, dass der Ring der Ventilhalterung an einer Innenseite des Buchsenkörpers anliegt. Der Ring der Ventilhalterung mag insbesondere wenigstens ein Rastelement zum Verrasten in dem Buchsenkörper bzw. Steckerkörper aufweisen. Vorteilhafterweise sind der Ring und der Führungsdurchgang durch wenigstens zwei/drei/vier Streben der Ventilhalterung in radialer Richtung miteinander verbunden. Es ist bevorzugt, dass in axialer Blickrichtung auf die Ventilhalterung zwischen den Streben Fenster angeordnet sind, welche dem Durchlass des Fluids dienen. Es ist von Vorteil, dass die Ventilhalterung zwischen dem Verbindungsabschnitt und dem Ventilsitz angeordnet ist. Dieses Merkmal definiert die Arbeitsrichtung des Buchsenventils bzw. Steckerventils, so dass der Ventilkörper zweckmäßigerweise in axial auswärtiger Richtung arbeitet und abdichtet.

Mit Vorteil ist ein Innendurchmesser des Verbindungsabschnittes kleiner als ein Innendurchmesser des Ventilabschnittes und/oder als ein Innendurchmesser des Dichtungsabschnittes und/oder eines Innendurchmessers des Kupplungsabschnittes. Vorzugsweise ist ein Innendurchmesser des Ventilabschnittes kleiner als ein Innendurchmesserdes Dichtungsabschnittes und/oder ein Innendurchmesser des Kupplungsabschnittes. Zweckmäßigerweise ist ein Innendurchmesser des Dichtungsabschnittes kleiner als ein Innendurchmesser des Kupplungsabschnittes. Die Wirkung dieses Merkmals bzw. dieser Merkmale besteht darin, dass hierdurch ein besonders kompakter Buchsenkörper geschaffen wird, welcher gleichzeitig niedrige Strömungswiderstände gewährleistet. Außerdem bieten die unterschiedlichen Innendurchmesser die Möglichkeit der Ausbildung von Stufen auf einer Innenseite des Buchsenkörpers, an welchen die Ventilhalterung und/oder der Ventilsitz zwecks Stabilität anlegen können.

Gemäß einer sehr bevorzugten Ausführungsform umfasst der Ventilkörper der Kupplungsbuchse bzw. des Kupplungssteckers im Längsschnitt einen sich in axial auswärtiger Richtung aufweitenden Abschnitt und einen sich in axial auswärtiger Richtung verjüngenden Abschnitt. Vorzugsweise ist der sich in axial auswärtiger Richtung aufweitende Abschnitt wenigstens abschnittsweise deckungsgleich mit einer/der Rückfläche des Ventilkörpers. Der Ausdruck "Rückfläche" meint vorzugsweise die sichtbare Fläche des Ventilkörpers mit Blickrichtung nach axial auswärts. Mit Vorteil ist der sich in axial auswärtiger Richtung verjüngende Abschnitt des Ventilkörpers wenigstens abschnittsweise deckungsgleich mit einer/der Dichtfläche. Die Dichtfläche ist vorzugsweise ein kreisringförmiger Abschnitt einer Vorderfläche des Ventilkörpers, welcher im gesperrten Zustand des Buchsenventils an dem Ventilsitz anliegt. Die Wirkung des sich aufweitenden und des sich verjüngenden Abschnittes besteht darin, den Ventilkörper möglichst strömungswiderstandsarm auszubilden. Der sich aufweitende und der sich verjüngende Abschnitt kann jeweils konisch ausgestaltet, kann im Längsschnitt aber auch gerundet ausgebildet sein.

Es ist ganz besonders von Vorteil, dass der Ventilkörper einen Kunststoff und weiter vorzugsweise ein Elastomer umfasst. Das Elastomer ist vorzugsweise ein Gummi oder ein thermoplastisches Elastomer. Es ist ganz besonders bevorzugt, dass das Elastomer die Dichtfläche des Ventilkörpers bildet. Die Wirkung des Elastomers besteht insbesondere darin, dass hierdurch eine besonders gute Abdichtung zwischen Ventilkörper und Ventilsitz erreicht wird. Es ist sehr bevorzugt, dass der Ventilkörper lediglich aus einem Elastomer besteht. Der Ventilkörper ist vorteilhafterweise einstückig und insbesondere integral ausgebildet. Mit Vorteil ist eine/die Ventilführung mithilfe eines Kraftschlusses zwischen der Ventilführung und dem Ventilkörper an dem Ventilkörper befestigt. Gemäß einer Ausführungsform umfasst der Ventilkörper das Elastomer und einen weiteren Kunststoff. Der weitere Kunststoff weist bevorzugtermaßen eine größere Härte auf. Mit Vorteil umschließt das Elastomer den weiteren Kunststoff wenigstens abschnittsweise in axialer und/oder radialer Richtung. Der weitere, härtere Kunststoff bildet vorzugsweise Stützstrukturen, z. B. Rippen, Streben o. ä., aus.

Der Ventilkörper des Buchsenventils umfasst vorzugsweise auf seiner Rückseite bzw. seiner der Ventilhalterung zugewandten Stirnseite eine Führungsaufnahme zur abschnittsweisen Aufnahme einer/der Ventilführung bzw. eines/des Ventilführungskopfes. Es ist bevorzugt, dass die Führungsaufnahme ausgebildet ist, ein/das Rückstellelement mindestens abschnittsweise aufzunehmen. Der Ventilkörper des Buchsenventils ist vorteilhafterweise in axialer Richtung zwischen der Ventilhalterung und der Dichtung bzw. der Kupplungsöffnung angeordnet. Es ist sehr von Vorteil, dass der Ventilkörper im gesperrten Zustand des Buchsenventils abschnittsweise und insbesondere lediglich abschnittsweise zwischen der Ventilhalterung und dem Ventilsitz angeordnet ist.

Besonders vorzugsweise umfasst der Rückhalter wenigstens zwei Rastelemente. Das wenigstens eine Rastelement ist mit Vorteil so ausgebildet, dass dieses - insbesondere durch den Kupplungsstecker- unter Speicherung einer Rückstellenergie deformierbar ist. Es ist besonders bevorzugt, dass das wenigstens eine Rastelement bei vollständiger Einführung eines/des Kupplungssteckers die gespeicherte Rückstellenergie wieder freigibt und in den nicht deformierten Zustand zurückkehrt. Es ist sehr bevorzugt, dass die wenigstens zwei Rastelemente einstückig und vorzugsweise integral miteinander verbunden sind. Mit Vorteil ist der Rückhalter einstückig und weiter vorzugsweise integral ausgebildet. Der Rückhalter kann als U-Form oder als Ring ausgestaltet sein. Es ist sehr bevorzugt, dass der Rückhalter beweglich am Buchsenkörper gelagert ist. Vorzugsweise sind die Rastelemente in radialer Richtung zwecks Einrasten am Kupplungsstecker beweglich. Es ist sehr bevorzugt, dass die Rastelemente in radialer Richtung so beweglich ausgebildet sind, dass der Eingriff am Kupplungsstecker gelöst werden kann. Der Rückhalter kann ein Metall und/oder einen Kunststoff umfassen. Die Wirkung des Merkmals des einstückigen Rückhalters besteht darin, dass hierdurch der Herstellungsaufwand verringert wird. Dieses Merkmal ist außerdem vorteilhaft hinsichtlich Kompaktheit und Verlierschutz.

Zweckmäßigerweise weist das Buchsenventil bzw. Steckerventil ein Rückstellelement- vorzugsweise eine Feder und weiter vorzugsweise eine Spiralfeder - auf, wobei das Rückstellelementauf den Ventilkörpervorzugsweise in Richtung des Ventilsitzes eine Kraft ausübt. Das Rückstellelement ist mit Vorteil zwischen der Ventilhalterung und dem Ventilkörper angeordnet. Das Rückstellelement ist vorzugsweise an der Ventilhalterung gelagert bzw. abgestützt. Das Rückstellelement ist bevorzugtermaßen an dem Ventilkörper gelagert bzw. in diesem aufgenommen. Es ist sehr bevorzugt, dass in einem gesperrten Zustand des Buchsenventils bzw. Steckerventils das Rückstellelement mit einem axial auswärtigen Ende gegen den Ventilkörper und mit einem axial einwärtigen Ende gegen die Ventilhalterung drückt.

Es ist sehr bevorzugt, dass das Buchsenventil bzw. Steckerventil eine Ventilführung umfasst, wobei die Ventilführung die Bewegungsrichtung des Ventilkörpers definiert, wobei bevorzugt ist, dass der Ventilkörper die Ventilführung wenigstens axialabschnittsweise und in radialer Richtung wenigstens teilweise umschließt. Vorzugsweise umschließt der Ventilkörper die Ventilführung wenigstens axialabschnittsweise in radialer Richtung vollständig umlaufend. Demgegenüberistin der DE 10 2006 008 291 B4 offenbart, dass die Innenseite des Buchsenkörpers die Ventilführung für den Ventilkörper bildet. Folglich umschließt bei diesem Stand der Technik nicht der Ventilkörper die Ventilführung, sondern die Ventilführung den Ventilkörper. Die Wirkung des Umschließens der Ventilführung durch den Ventilkörper besteht darin, dass der Ventilkörper elastisch ausgebildetwerden kann. Wäre der Ventilkörper elastisch ausgebildet und würde gleichzeitig an einer Innenseite des Buchsenkörpers bzw. Steckerkörpers gleiten, so wäre die Reibung viel zu groß.

Mit Vorteil ist die Ventilführung des Buchsenventils bzw. Steckerventils schienenartig oder stabartig ausgeführt. Die Ventilführung umfasst bevorzugt einen axial auswärtigen Führungskopf und einen axial einwärtigen Führungsfuß. Es ist bevorzugt, dass der Führungskopf der Ventilführung am Ventilkörper und vorzugsweise in dem Ventilkörper angeordnet bzw. befestigt ist. Es ist besonders bevorzugt, dass der Führungsfuß in axialer Richtung gleitend in der Ventilhalterung bzw. in dem Führungsdurchgang der Ventilhalterung gelagert ist. Zur besseren Befestigung an dem Ventilkörper bzw. in dem Ventilkörper kann der Führungskopf in radialer Richtung auskragend ausgebildet sein.

Gemäß einer sehr bevorzugten Ausführungsform weist der Ventilkörper des Buchsenventils bzw. Steckerventils ein axial auswärtiges Stirnende auf, wobei das axial auswärtige Stirnende vorzugsweise eine ebene Druckfläche umfasst, wobei die ebene Druckfläche bevorzugt sich in einer senkrecht zur Mittenachse bzw. Mittelachse stehenden Ebene befindet. Mit Vorteil verläuft die Mittenachse bzw. Mittelachse durch die Druckfläche und weiter vorzugsweise durch einen Mittelpunkt der Druckfläche. Die Druckfläche mag in einer Vorderansicht des Ventilkörpers kreisförmig ausgebildet sein, kann aber auch vieleckig und asymmetrisch gestaltet sein. Die Wirkung der ebenen Druckfläche besteht vor allem darin, dass die Ventilkörper im verriegelten Zustand der Kupplungsanordnung stabil aufeinander abgestützt sind.

Es ist sehr bevorzugt, dass die Druckfläche des Buchsenventils bzw. Steckerventils die am weitesten nach axial außen stehende Fläche des Ventilkörpers ist. Vorzugsweise ist die Druckfläche in einer Vorderansicht des Ventilkörpers die radial innerste Fläche des Ventilkörpers. Es ganz besonders bevorzugt, dass die Druckfläche des Ventilkörpers im gesperrten Zustand des Buchsenventils bzw. Steckerventils gegenüber dem Ventilsitz in axialer Richtung nach außen vorsteht. Die Wirkung dieses Merkmals besteht darin, dass ein Druckkontakt mit einem identisch aufgebauten Ventilkörper des jeweils anderen Kupplungselementes möglich ist, so dass ein und derselbe Ventilkörper für beide Kupplungselemente genutzt werden kann und insbesondere zueinander komplementär ausgebildete Ventilkörper nicht erforderlich sind. Es ist bevorzugt, dass eine/die sich in axial einwärtiger Richtung im Längsschnitt aufweitende Fläche des Ventilkörpers an die Druckfläche in axialer und/oder in radialer Richtung mittelbar oder unmittelbar anschließt.

Besonders vorzugsweise ist die axiale Position des Ventilkörpers des Buchsenventils im gesperrten Zustand des Buchsenventils gegenüber der axialen Position des Ventilkörpers im geöffneten Zustand des Buchsenventils axial weiter auswärts befindlich. Dies ermöglicht eine gegenseitige Betätigung der beiden Ventile. Gemäß einer bevorzugten Ausführungsform ist der Ventilkörper des Buchsenventils im gesperrten Zustand und/oder im geöffneten Zustand des Buchsenventils vollständig außerhalb des Verbindungsabschnittes befindlich. Die Wirkung des vollständig außerhalb des Verbindungsabschnittes angeordneten Ventilkörpers bestehtdarin, dass ein geringerer Strömungswiderstand im Verbindungsabschnitt bzw. ein kompakterer Verbindungsabschnitt erreicht wird. Es ist bevorzugt, dass der Ventilkörper des Buchsenventils im gesperrten Zustand des Buchsenventils abschnittsweise in axialer Richtung in den Dichtungsabschnitt hineinragt.

Es ist bevorzugt, dass eine Fluidleitung eine oben beschriebene Kupplungsbuchse sowie ein Rohr aufweist, wobei das Rohr vorzugsweise auf den Verbindungsabschnitt aufgesteckt oder in den Verbindungsabschnitt eingesteckt ist. Der Verbindungsabschnitt ist zweckmäßigerweise so ausgebildet, dass ein Rohr auf den Verbindungsabschnitt aufsteckbar oder in den Verbindungsabschnitteinsteckbarist. Die Verbindung von dem Rohr und dem Verbindungsabschnitt mag über einen Formschluss und/oder einem Kraftschluss und/oder einen Stoffschluss erreicht werden. Die Verbindung mittels Kraftschluss kann beispielsweise dadurch erzielt werden, dass das Rohr beim Aufschieben auf den Verbindungsabschnitt radial aufgeweitetwird, so dass ein Presssitz erreicht wird. Der Kraftschluss kann beispielsweise noch dadurch verbessert werden, dass der Verbindungsabschnitt wenigstens teilweise umlaufende Rippen aufweist. Ein Stoffschluss ist beispielsweise mittels Schweißen, insbesondere Laserschweißen oder Reibschweißen, möglich. Ein Formschluss kann unter anderem durch eine innenliegende Nut in dem Rohr erzeugt werden. Gemäß einer bevorzugten Ausführungsformwird das Rohrin den Verbindungsabschnitt eingesteckt und mit Schweißen, insbesondere Laserschweißen, stoffschlüssig am Verbindungsabschnitt befestigt. Eine andere bevorzugte Ausführungsform besteht darin, das Rohr auf den Verbindungsabschnitt aufzustecken, wobei der Verbindungsabschnitt wenigstens eine umlaufende Rippe auf seiner Außenseite aufweist.

Es ist besonders bevorzugt, dass die Kupplungsbuchse bzw. der Kupplungsstecker strömungsoptimiert ausgebildet ist, weil das Buchsenventil bzw. Steckerventil einen nicht unerheblichen Strömungswiderstand verursachen. Es ist von Vorteil, wenn eine derVentilhalterung zugewandte Seite des Ventilsitzes des Buchsenventils bzw. Steckerventils im Längsschnitt der Kupplungsbuchse bzw. des Kupplungssteckers sich in axial einwärtiger Richtung - vorzugsweise gerundet- aufweitet. Es ist sehr bevorzugt, dass eine axial einwärtige Stirnseite der Ventilführung des Buchsenventils bzw. Steckerventils sich in axial einwärtiger Richtung im Längsschnitt - vorzugsweise gerundet - verjüngt. Es ist sehr bevorzugt, dass in einem geöffneten Zustand des Buchsenventils bzw. des Steckerventils die sich verjüngende Stirnseite der Ventilführung des Buchsenventils bzw. Steckerventils mit der Ventilhalterung fluchtet.

Die eingangs genannte Aufgabe wird gelöst durch einen Kupplungsstecker zur fluidischen Kupplung mit einer Kupplungsbuchse, insbesondere mit einer erfindungsgemäßen Kupplungsbuchse, wobei der Kupplungsstecker einen Steckerkörper umfasst, wobei der Steckerkörper einen An schlussabsch nitt zum Anschluss an ein Rohr oder an ein Aggregat und eine Kuppelfläche zur Kupplung mit einer Kupplungsbuchse umfasst, wobei der Kupplungsstecker so ausgebildet ist, dass eine Kupplungsbuchse auf den Kupplungsstecker aufsteckbar ist, wobei der Kupplungsstecker ein Verriegelungselement zur Verriegelung des Kupplungssteckers in einer Kupplungsbuchse aufweist, wobei der der Kuppelfläche zugeordnete axiale Abschnitt der Steckerkörpers und der Anschlussabschnitt über einen Fluidkanal miteinanderfluidisch verbunden sind, wobei der der Kuppelfläche zugeordnete Abschnitt des Fluidkanals in einem Längsschnitt des Kupplungssteckers eine Mittelachse sowie eine axiale und eine radiale Richtung sowie eine Umlaufrichtung definiert, wobei die Kuppelfläche in axial auswärtiger Richtung von einer Kuppelöffnung abgeschlossen wird, wobei in dem Fluidkanal ein Steckerventil angeordnet ist, wobei das Steckerventil eine Ventilhalterung, einen axial beweglichen Ventilkörper und einen Ventilsitz umfasst, wobei die Ventilhalterung und der Ventilsitz in axialer Richtung einen Ventilabschnitt des Steckerkörpers bzw. des Kupplungssteckers definieren, wobei der Kupplungsstecker so ausgebildet ist, dass der Ventilkörper in einem gesperrten Zustand des Steckerventils an dem Ventilsitz fluiddichtanliegt und in einem geöffneten Zustand des Steckerventils nicht an dem Ventilsitz anliegt, dadurch gekennzeichnet, dass der Kupplungsstecker so ausgebildet ist, dass die Ventilhalterung und/oder der Ventilkörper und/oder der Ventilsitz in axial einwärtiger Richtung in den Steckerkörper einsetzbar bzw. eingesetzt ist/sind, wobei die axiale Position des Ventilkörpers im gesperrten Zustand des Steckerventils gegenüber der axialen Position des Ventilkörpers im geöffneten Zustand des Steckerventils axial weiter auswärts befindlich ist.

Es ist bevorzugt, dass der Steckerkörper einen Mittelabschnitt aufweist. Der Mittelabschnitt ist zweckmäßigerweise zwischen dem Anschlussabschnitt und dem Ventilabschnitt befindlich. Mit Vorteil umfasst der Steckerkörper ein Verriegelungselement. Das Verriegelungselement ist vorzugsweise dazu ausgebildet, mit einem Rückhalter einer/der Kupplungsbuchse den Kupplungsstecker in der Kupplungsbuchse zu verriegeln. Es ist bevorzugt, dass das Verriegelungselement bzw. der Rückhalter so ausgebildet ist/sind, dass der Kupplungsstecker lösbar in der Kupplungsbuchse verriegelt werden kann. Das Verriegelungselement mag wenigstens eine Kante aufweisen, mit deren Hilfe der Kupplungsstecker an einem/dem Rastelement der Kupplungsbuchse verrastet. Die Kante mag Bestandteil einer Schulter, eines umlaufenden Bundes oder einer Nut des Steckerkörpers sein. Das Verriegelungselement ist vorzugsweise als Schulter, umlaufender Bund und/oder Nut ausgestaltet.

Mit Vorteil ist die Kuppelfläche wenigstens abschnittsweise zylindrisch ausgebildet. Es ist bevorzugt, dass die Kuppelfläche des Kupplungssteckers komplementär zum Dichtungsabschnitt bzw. zur Dichtung der Kupplungsbuchse ausgestaltet ist. Vorzugsweise umfasst der Steckerkörper einen konischen Abschnitt. Der konische Abschnitt ist vorzugsweise so ausgebildet, dass durch das Einführen des Kupplungssteckers in die Kupplungsbuchse der konische Abschnittdas wenigstens eine Rastelement der Kupplungsbuchse deformiert bzw. unter Spannung setzt bzw. die beiden Rastelemente elastisch auseinanderspreizt. Mit Vorteil ist der konische Abschnitt zwischen der Kuppelfläche und dem Verriegelungselement befindlich.

Bevorzugtermaßen umfasst der Steckerkörper wenigstens ein Sicherungsteil und vorzugsweise zwei Sicherungsteile. Das wenigstens eine Sicherungsteil ist zweckmäßigerweise dazu ausgebildet, zwecks Verdrehsicherung mit einem Sicherungselement der Kupplungsbuchse in Eingriff gebracht zu werden. Es ist bevorzugt, dass die beiden Sicherungsteile bezüglich der Mittelachse diametral zueinander angeordnet sind. Es ist bevorzugt, dass das wenigstens eine Sicherungsteil in axialer Richtung zwischen dem Anschlussabschnitt und der Kuppelfläche bzw. dem konischen Abschnitt bzw. dem Verriegelungselement angeordnet ist. Vorzugsweise umfasst der Steckerkörper einen Flansch. Der Flansch ist bevorzugt zwischen der Kuppelfläche und dem Anschlussabschnitt angeordnet. Der Flansch erstreckt sich zweckmäßigerweise in radialer Richtung von dem Anschlussabschnitt zu dem wenigstens einen Sicherungsteil. Der Steckerkörper ist vorzugsweise so ausgebildet, dass der Flansch einem Anschlag für ein auf den Anschlussabschnitt aufgeschobenes Fluidelement, insbesondere für ein Rohr, dient.

Der Steckerkörper kann gewinkelt oder gerade ausgebildet sein. Unter einem gerade ausgebildeten Steckerkörper wird vorzugsweise verstanden, dass die Mittelachse des Ventilabschnittes bzw. des zur Kuppelfläche gehörigen Abschnittes des Steckerkörpers konzentrisch bzw. identisch mit einer Längsachse des Anschlusssabschnittes ist. Unter dem Ausdruck "gewinkelter Steckerkörper" wird zweckmäßigerweise verstanden, dass die Längsachse des Anschlussabschnittes in einem Längsschnitt des Steckerkörpers relativ zu einer Mittelachse des Ventilabschnittes bzw. zur Kuppelfläche gehörigen Abschnittes des Steckerkörpers gewinkelt verläuft. Es ist sehr bevorzugt, dass der Steckerkörper dem VDA-Standard oder dem SAE-Standard für Fluidkupplungen entspricht.

Es ist besonders bevorzugt, dass der Ventilsitz ein separat von dem Steckerkörper hergestelltes Bauteil ist. Zweckmäßigerweise ist der Ventilsitz nicht integral mit dem Steckerkörper ausgebildet. Vorzugsweise umfasst der Ventilsitz einen Kunststoff und weiter vorzugsweise lediglich Kunststoff. Besonders vorzugsweise ist der Ventilsitz ringförmig und weiter vorzugsweise kreisringförmig ausgebildet. Der Ventilsitz kann mittels Kraftschluss und/oder Formschluss und/oder Stoffschluss in den Steckerkörper eingesetzt sein. Mit Vorteil ist der Ventilsitz in den Steckerkörper eingerastet oder eingeklemmt. Es ist sehr vorteilhaft, dass der Steckerkörper eine radial nach innen ragende Protrusion aufweist, an welche der Ventilsitz beim Einsetzen in den Steckerkörper in axial einwärtiger Richtung anschlägt. Es ist sehr bevorzugt, dass der Ventilsitz an der radial nach innen ragenden Protrusion anliegt und vorzugsweise an dieser angeschlossen bzw. befestigt ist. Zweckmäßigerweise definiert die Protrusion die axiale Position des Ventilsitzes. Es ist von Vorteil, dass der Ventilsitz an einem axial auswärtigen Ende des Steckerkörpers angeordnet ist. Vorzugsweise bildet der Ventilsitz eine axial auswärtige Stirnfläche des Kupplungssteckers. Bevorzugtermaßen schließt der Ventilsitz ein axial auswärtiges Ende des Steckerkörpers bzw. des Kupplungssteckers ab. Vorteilhafterweise definiert der Ventilsitz einen Innendruckmesser der Kuppelöffnung. Die Wirkung der separaten Herstellung des Ventilsitzes relativ zum Steckerkörper besteht darin, dass dann der Ventilsitz nachträglich in den Steckerkörper eingesetzt werden kann. Hierdurch ist es möglich, dass zunächst die restlichen Ventilkomponenten von der Kuppelöffnung kommend in den Ventilabschnitt des Steckerkörpers eingesetzt werden, um anschließend bzw. abschließend den Ventilsitz in den Steckerkörper einzusetzen. Hierdurch muss das Steckerventil nicht vom Anschlussabschnitt her kommend in den Steckerkörper eingesetzt werden, so dass der Steckerkörper insgesamt als einstückiges und sogar auch als integrales Teil hergestellt werden kann. Dies gewährleistet einen geringeren Herstellungsaufwand bei der Herstellung des Steckerkörpers sowie außerdem eine größere Stabilität und letztlich auch Fluiddichtigkeit des Kupplungssteckers.

Mit Vorteil ist ein Innendurchmesser des Anschlussabschnittes kleiner als ein Innendurchmesser des Mittelabschnittes und/oder als ein Innendurchmesser des Ventilabschnittes. Vorzugsweise ist ein Innendurchmesser des Mittelabschnittes kleiner als ein Innendurchmesser des Ventilabschnittes. Die Wirkung dieses Merkmals bzw. dieser Merkmale besteht darin, dass hierdurch ein besonders kompakter Steckerkörper geschaffen wird, welcher gleichzeitig niedrige Strömungswiderstände gewährleistet. Außerdem bieten die unterschiedlichen Innendurchmesser die Möglichkeit der Ausbildung von Stufen auf einer Innenseite des Steckerkörpers, an welchen die Ventilhalterung und/oder der Ventilsitz zwecks Stabilität anlegen können.

Der Ventilkörperdes Steckerventils umfasst vorzugsweise auf seiner Rückseite bzw. seiner der Ventilhalterung zugewandten Stirnseite eine Führungsaufnahme zur abschnittsweisen Aufnahme einer/der Ventilführung bzw. eines/des Ventilführungskopfes. Es ist bevorzugt, dass die Führungsaufnahme ausgebildet ist, ein/das Rückstellelement mindestens abschnittsweise aufzunehmen.

Es ist sehr von Vorteil, dass der Ventilkörper des Steckerventils im gesperrten Zustand des Steckerventils abschnittsweise und insbesondere lediglich abschnittsweise zwischen der Ventilhalterung und dem Ventilsitz angeordnet ist.

Besonders vorzugsweise ist die axiale Position des Ventilkörpers des Steckerventils im gesperrten Zustand des Steckerventils gegenüber der axialen Position des Ventilkörpers im geöffneten Zustand des Steckerventils axial weiter auswärts befindlich. Dies ermöglicht eine gegenseitige Betätigung der beiden Ventile. Gemäß einer bevorzugten Ausführungsform ist der Ventilkörper des Steckerventils im gesperrten Zustand und/oder im geöffneten Zustand des Steckerventils vollständig außerhalb des Anschlussabschnittes befindlich. Die Wirkung des vollständig außerhalb des Anschlussabschnittes angeordneten Ventilkörpers besteht darin, dass ein geringerer Strömungswiderstand im Anschlussabschnitt bzw. ein kompakterer Anschlussabschnitt erreicht wird.

Es ist bevorzugt, dass eine Fluidleitung einen oben beschriebenen Kupplungsstecker sowie ein Rohr aufweist, wobei das Rohr vorzugsweise auf den Anschlussabschnitt aufgesteckt oder in den Anschlussabschnitt eingesteckt ist. Der Anschlussabschnitt ist zweckmäßigerweise so ausgebildet, dass ein Rohr auf den Anschlussabschnitt aufsteckbar oder in den Anschlussabschnitt einsteckbar ist. Der Anschluss von dem Rohr und dem Anschlussabschnitt mag über einen Formschluss und/oder einem Kraftschluss und/oder einen Stoffschluss erreicht werden. Der Anschluss mittels Kraftschluss kann beispielsweise dadurch erzielt werden, dass das Rohr beim Aufschieben auf den Anschlussabschnitt radial aufgeweitet wird, so dass ein Presssitz erreicht wird. Der Kraftschluss kann beispielsweise noch dadurch verbessert werden, dass der Anschlussabschnittwenigstens teilweise umlaufende Rippen aufweist. Ein Stoffschluss ist beispielsweise mittels Schweißen, insbesondere Laserschweißen oder Reibschweißen, möglich. Ein Formschluss kann unter anderem durch eine innenliegende Nut in dem Rohrerzeugtwerden. Gemäß einer bevorzugten Ausführungsform wird das Rohr in den Anschlussabschnitt eingesteckt und mit Schweißen, insbesondere Laserschweißen, stoffschlüssig am Anschlussabschnitt befestigt. Eine andere bevorzugte Ausführungsform besteht darin, das Rohr auf den Anschlussabschnitt aufzustecken, wobei der Anschlussabschnitt wenigstens eine umlaufende Rippe auf seiner Außenseite aufweist.

Die eingangs genannte Aufgabe wird gelöst durch eine Kupplungsanordnung umfassend eine Kupplungsbuchse und einen Kupplungsstecker, wobei die Kupplungsbuchse vorzugsweise erfindungsgemäß ausgebildet ist, wobei der Kupplungsstecker vorzugsweise erfindungsgemäß ausgebildet ist, wobei der Kupplungsstecker komplementär zur Kupplungsbuchse ausgebildet und fluiddicht in die Kupplungsbuchse einsteckbar ist, wobei die Kupplungsanordnung so ausgebildet ist, dass der Kupplungsstecker in der Kupplungsbuchse lösbar fixiert werden kann, wobei die Kupplungsbuchse ein Buchsenventil und der Kupplungssteckerein Steckerventil aufweist, wobei die Kupplungsanordnung so ausgebildet ist, dass bei einem Einstecken des Kupplungssteckers in die Kupplungsbuchse das Buchsenventil und das Steckerventil jeweils von einem gesperrten Zustand in einen geöffneten Zustand überführt werden.

Die eingangs genannte Aufgabe wird gelöstdurch ein Verfahren zum Verbinden einer Kupplungsbuchse und eines Kupplungssteckers einer Kupplungsanordnung, umfassend eine Kupplungsbuchse und einen Kupplungsstecker, wobei die Kupplungsbuchse vorzugsweise erfindungsgemäß ausgebildet ist, wobei der Kupplungsstecker vorzugsweise erfindungsgemäß ausgebildet ist, wobei der Kupplungsstecker komplementär zur Kupplungsbuchse ausgebildet und fluiddicht in die Kupplungsbuchse einsteckbar ist, wobei die Kupplungsanordnung so ausgebildet ist, dass der Kupplungsstecker in der Kupplungsbuchse lösbarfixiert werden kann, wobei die Kupplungsbuchse ein Buchsenventil und der Kupplungsstecker ein Steckerventil aufweist, wobei die Kupplungsanordnung so ausgebildet ist, dass bei einem Einstecken des Kupplungssteckers in die Kupplungsbuchse das Buchsenventil und das Steckerventil jeweils von einem gesperrten Zustand in einen geöffneten Zustand überführt werden.

Die eingangs genannte Aufgabe wird gelöst durch eine Verwendung einer erfindungsgemäßen Kupplungsbuchse und/oder eines erfindungsgemäßen Kupplungssteckers in einem Fahrzeug und insbesondere in einem Elektrofahrzeug, vorzugsweise zur fluidischen Kühlung und besonders vorzugsweise zur fluidischen Kühlung eines Akkus eines Elektrofahrzeuges.

Die Erfindung wird nachfolgend anhand eines Ausführungsbeispieles mithilfe von sechs Figuren näher erläutert. Es zeigen
- Fig. 1: eine perspektivische Ansicht einer erfindungsgemäßen Kupplungsbuchse,
- Fig. 2: einen Längsschnitt durch die Kupplungsbuchse nach Fig. 1,
- Fig. 3: ein Ventil der Kupplungsbuchse nach Fig. 2 in einer Explosionsdarstellung,
- Fig. 4: eine perspektivische Ansicht eines erfindungsgemäßen Kupplungssteckers,
- Fig. 5: einen Längsschnitt durch den Kupplungsstecker aus Fig. 4 und
- Fig. 6: einen Längsschnitt durch eine erfindungsgemäße Kupplungsanordnung umfassend die Kupplungsbuchse gemäß Fig. 2 und den Kupplungsstecker nach Fig. 5.

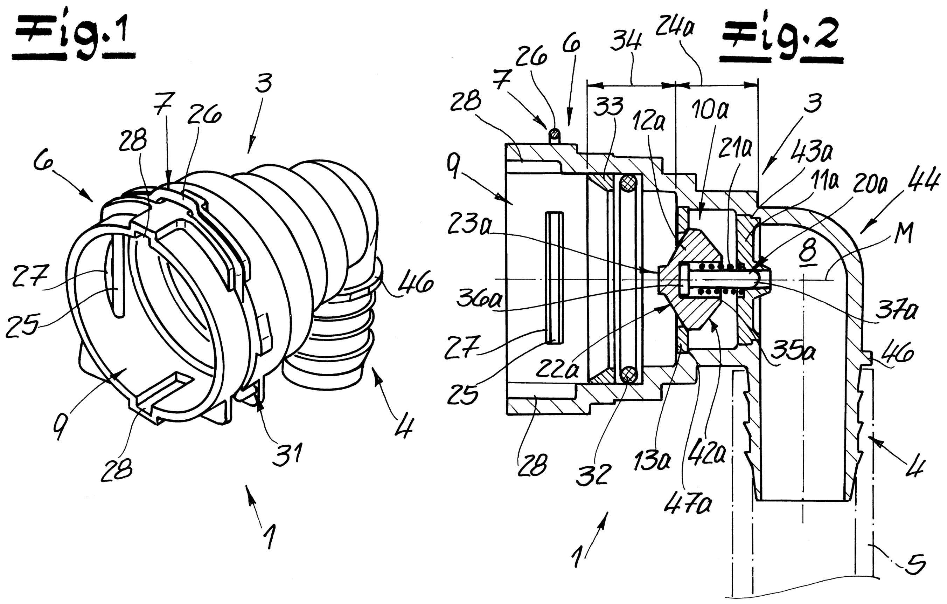

Die erfindungsgemäße Kupplungsbuchse 1 aus Fig. 1 umfasst einen, vorzugsweise integralen, Buchsenkörper 3 sowie einen Rückhalter 7. Der Rückhalter 7 dieses Ausführungsbeispieles ist aus Draht gefertigt und vorzugsweise im Wesentlichen U-förmig ausgestaltet. In diesem Ausführungsbeispiel sind der Rückhalter 7 sowie der Buchsenkörper 3 so ausgebildet, dass sie dem VDA-Standard für Fluidkupplungen entsprechen. In anderen, nicht dargestellten Ausführungsbeispielen können der Rückhalter und der Buchsenkörper beispielsweise dem SAE-Standard entsprechen. Der Buchsenkörper 3 weist einen Kupplungsabschnitt 6 auf, welcher nach axial auswärts von einer Kupplungsöffnung 9 begrenzt wird. Mit Vorteil ist der Rückhalter 7 im Kupplungsabschnitt 6 angeordnet.

Der Buchsenkörper 3 umfasst ferner einen Verbindungsabschnitt 4, der beispielsweise umlaufende, widerhakenartige Rippen aufweisen kann, welche einen guten Kraftschluss mit einem aufzusteckenden Rohr 5 (s. Fig. 2) bieten. In anderen, nicht dargestellten Ausführungsbeispielen kann der Verbindungsabschnitt allerdings auch so ausgebildet sein, dass das Rohr in den Verbindungsabschnitteinsteckbar ist und beispielsweise per Laserschweißung am Verbindungsabschnitt befestigt werden kann. Die Kupplungsbuchse 1 und das Rohr 5 mögen zusammen eine Fluidleitung 1, 5 bilden. Es ist bevorzugt, dass das Rohr 5 und/oder der Buchsenkörper 3 einen Kunststoff aufweisen und vorzugsweise vollständig aus Kunststoff hergestellt ist/sind.

In diesem Ausführungsbeispiel weist der Rückhalter 7 eine Basis 26 sowie bevorzugt zwei Rastelemente 25 auf, welche mit Vorteil als zwei Schenkel ausgebildet sind. Die Basis 26 und die Rastelemente 25 ergeben zusammen vorzugsweise eine U-Form des Rückhalters 7. In anderen Ausführungsbeispielen kann der Rückhalter insbesondere auch vollständig umlaufend und damit ringartig ausgestaltet sein. In diesem Ausführungsbeispiel ist die Basis 26 zwischen zwei Flanschen auf einer Außenseite des Buchsenkörpers gelagert, während die beiden Rastelemente 25 in einer jeweiligen Aussparung 27 des Buchsenkörpers 3 angeordnet sind, wenn der Rückhalter 7 vollständig in den Buchsenkörper 3 eingeführt ist. Enden der Rastelemente 25 können beispielsweise sich in axialer Richtung erstrecken und mögen von einer jeweiligen Schenkelaufnahme 31 des Buchsenkörpers 3 aufgenommen werden.

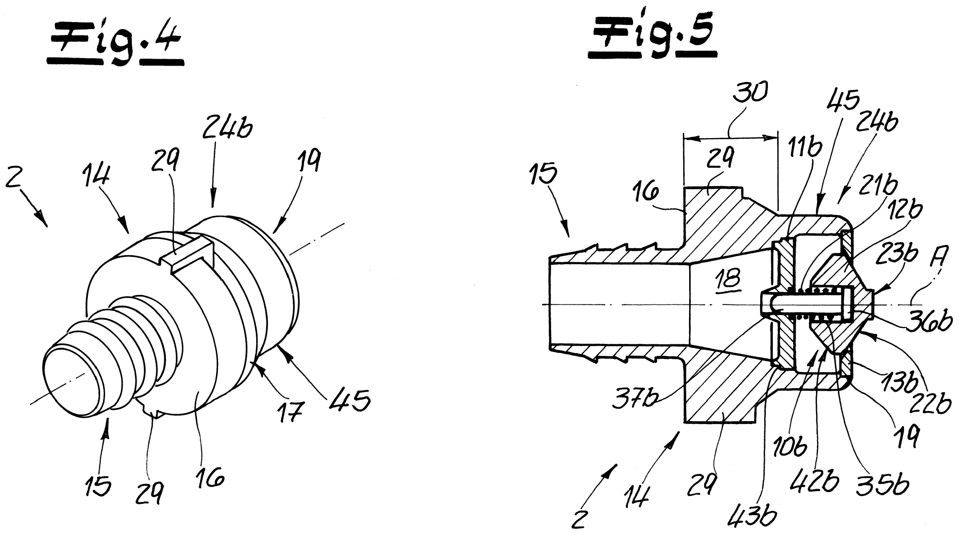

Vorzugsweise umfasst der Buchsenkörper 3 wenigstens ein Sicherungselement 28 und vorzugsweise zwei Sicherungselemente 28. Die Sicherungselemente 28 dieses Ausführungsbeispieles sind als nutartige Aufnahmen ausgestaltet und dienen als Verdrehsicherung für einen in den Figuren 4 und 5 dargestellten Kupplungsstecker 2. Der Kupplungsstecker 2 weist hierzu bevorzugtermaßen ein oder zwei Sicherungsteile 29 auf, welche komplementär und damit vorzugsweise federartig in die Sicherungselemente 28 beim Einführen des Kupplungssteckers 2 in die Kupplungsbuchse 1 eingreifen.

Es ist mit Blick auf Fig. 1 bevorzugt, dass ein Außendurchmesserdes Buchsenkörpers 3 mit dem Kupplungsabschnitt 6 beginnend in Richtung des Verbindungsabschnittes 4 zunehmend und vorzugsweise stufenartig abnimmt. Es ist von Vorteil, dass der Verbindungsabschnitt 4 gemäß Fig. 2 zum Rest des Buchsenkörpers 3 durch einen Flansch 46 begrenzt wird, welcher vorteilhafterweise als Anschlag für das Rohr 5 dient.

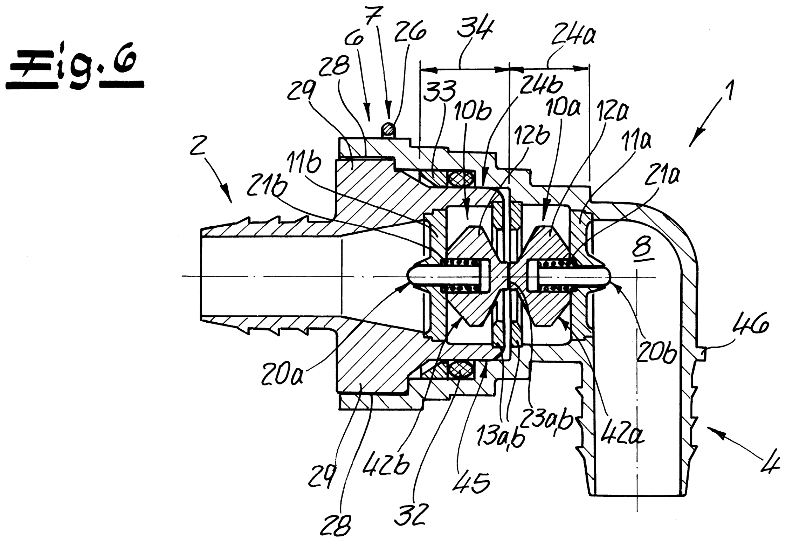

Gemäß Fig.2 werden der Verbindungsabschnitt 4 und der Kupplungsabschnitt 6 durch einen Innenkanal 8 miteinander fluidisch verbunden. Eine Dichtung 32 liegt bei eingestecktem Kupplungsstecker 2 kraftschlüssig an einer Außenseite des Kupplungssteckers 2 an (s. insbesondere Fig. 6), so dass die Lumen des Kupplungssteckers 2 und der Kupplungsbuchse 1 nach außen hin fluidisch abgedichtet sind. Die Kupplungsbuchse 1 umfasst mit Vorteil einen Dichtungshalter 33, welcher bevorzugt als separater Ring in dem Buchsenkörper 3 zur Fixierung der Dichtung 32 befestigt wird. Die Befestigung kann insbesondere mittels Einrasten des Dichtungshalters 33 auf einer Innenseite des Buchsenkörpers 3 vorgenommen werden.

Der dem Kupplungsabschnitt 6 zugeordnete Abschnitt des Innenkanals 8 weist im Längsschnitt der Fig. 2 eine Mittenachse M auf. Die Mittenachse M definiert eine axiale Richtung sowie eine radiale Richtung und außerdem eine Umlaufrichtung. Zweckmäßigerweise sind Richtungsangaben stets auf den entsprechenden Abschnitt bezogen, so dass die axiale Richtung des Verbindungsabschnittes eine andere Richtung als die axiale Richtung des Kupplungsabschnittes sein kann und in diesem Ausführungsbeispiel auch ist. Die axiale Richtung wird nachfolgend unterschieden in eine axial einwärtige Richtung, welche auf das Rohr 5 bzw. den Verbindungsabschnitt 4 hinzuläuft. Demzufolge ist die axial auswärtige Richtung als Richtung zur Kupplungsöffnung 9 hin zu verstehen.

Erfindungsgemäß umfasst die Kupplungsbuchse 1 ein Buchsenventil 10a, welches in dem Buchsenkörper 3 angeordnet bzw. in diesen eingesetzt ist. Das Buchsenventil 10a umfasst eine Ventilhalterung 11a, einen axial beweglichen Ventilkörper 12a sowie einen Ventilsitz 13a. Vorzugsweise weist das Buchsenventil 10a ferner eine Ventilführung 20a sowie ein Rückstellelement 21a auf. Das Rückstellelement21a dieses Ausführungsbeispieles istals Spiralfeder ausgestaltet, während die Ventilführung 20a bevorzugt stab- oder bolzenförmig ausgebildet ist. Der Ventilkörper 12a umfasst vorzugsweise einen Kunststoff, weiter vorzugsweise ein Elastomer und ganz besonders vorzugsweise ein thermoplastisches Elastomer. Demgegenüber mag der Ventilsitz 13a einen härteren Kunststoff als der Ventilkörper 12a aufweisen. Mit Vorteil ist der Ventilsitz 13a etwa unterlegscheibenartig ausgebildet und mag in den Buchsenkörper 3 eingerastet sein.

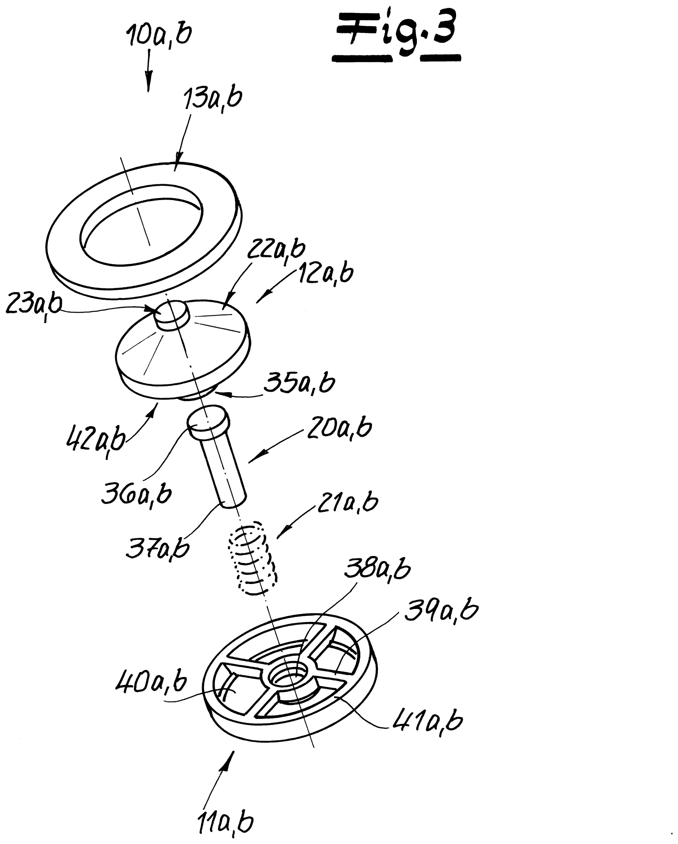

Figur3 veranschaulichtden Aufbau des Buchsenventils 10a noch etwas weiter. Demzufolge weist der Ventilkörper 12a vorzugsweise eine Druckfläche 23a auf, welche das axial auswärtige Stirnende des Ventilkörpers 12a darstellt (s. auch Fig. 2). Auf die Druckfläche 23a folgt in diesem Ausführungsbeispiel ein sich in axial einwärtiger Richtung aufweitender Abschnitt, der mit einer Dichtfläche 22a bevorzugt abschnittsweise in einem gesperrten Zustand des Buchsenventils 10a an dem Ventilsitz 13a anliegt. Die Dichtfläche 22a dieses Ausführungsbeispieles ist ein Teilabschnitt des sich axial einwärts aufweitenden Abschnittes des Ventilkörpers 12a. In weiter axial einwärtiger Richtung ist in den Figuren 2 und 3 zu erkennen, dass der Ventilkörper 12a eine Rückseite 42a mit einem sich im Längsschnitt verjüngenden Abschnitt aufweist, so dass der Ventilkörper 12a dieses Ausführungsbeispieles eine etwa rautenartige Form im Längsschnitt aufweist.

Mit Vorteil umfasst der Ventilkörper 12a gemäß der Figuren 2 und 3 an einer der Druckfläche 23a gegenüberliegenden Stirnseite eine Führungsaufnahme 35a für die Ventilführung 20a sowie zweckmäßigerweise auch für das Rückstellelement 21a. Zur sicheren Befestigung der Ventilführung 20a in dem Ventilkörper 12a bzw. in dessen Führungsaufnahme 35a mag die Ventilführung 20a einen, vorteilhafterweise auskragenden, Führungskopf 36a aufweisen. Der Führungskopf 36a kann beispielsweise etwa T-förmig ausgestaltet sein. Mit Vorteil ist der Ventilkörper 12a elastisch ausgebildet, so dass er den Führungskopf 36a einrastend oder kraftschlüssig aufnehmen kann. Insbesondere in Fig. 2 ist zu erkennen, dass das Rückstellelement 21a die Ventilführung 20a dieses Ausführungsbeispieles abschnittsweise umschließt. Bevorzugt ist ein axial auswärtiges Ende des Rückstellelementes 21a in dem Ventilkörper 12a gelagert, wobei vorzugsweise ein axial einwärtiges Ende des Rückstellelementes 21a an der Ventilhalterung 11a abgestützt wird. Die Ventilhalterung 11a ist mit Vorteil an einem radial nach innen ragenden Vorsprung 43a des Buchsenkörpers 3 befestigt und vorzugsweise eingerastet. Der Ventilsitz 13a ist bevorzugt an einer radial nach innen ragenden Protrusion 47a des Buchsenkörpers 3 befestigt und vorzugsweise eingerastet.

In Fig. 3 ist aufgrund der Perspektivdarstellung die Ventilhalterung 11a besonders gut zu erkennen. Mit Vorteil umfasst die Ventilhalterung 11a einen Führungsdurchgang 38a, in welchem ein Führungsfuß 37a der Ventilführung 20a axial beweglich gelagert ist. Diese axiale Beweglichkeit der Ventilführung 20a wird besonders durch einen Vergleich der Figuren 2 und 6 ersichtlich. Die Ventilhalterung 11a mag einen Ring 41a aufweisen, mit welchem die Ventilhalterung 11a in dem Buchsenkörper 3, beispielsweise mittels Einrasten, befestigt wird. Es ist bevorzugt, dass die Ventilhalterung 11a Streben 39a aufweist, welche den Ring 41a mit dem Führungsdurchgang 38a verbinden. Die Streben 39a bilden zugleich Fenster 40a, durch welche das Fluid strömen kann. Die Fenster 40a sind aufgrund der jeweils gewählten Perspektive zwar in Fig. 3, nicht aber in Fig. 2 ersichtlich.

Die Ventilhalterung 11a und der Ventilsitz 13a begrenzen einen Ventilabschnitt24a, wie dies aus Fig. 2 ersichtlich ist. In diesem Ausführungsbeispiel wird der Ventilabschnitt 24a in axial auswärtiger Richtung von einem Dichtungsabschnitt 34 begrenzt, wobei der Dichtungsabschnitt 34 vorzugsweise durch den Ventilsitz 13a und den Dichtungshalter 33 bestimmt wird. Zweckmäßigerweise ist der Dichtungsabschnitt 34 zwischen dem Kupplungsabschnitt 6 und dem Ventilabschnitt 24a angeordnet. In diesem Ausführungsbeispiel ist die Kupplungsbuchse 1 gewinkelt ausgeführt, so dass eine Längsachse des Verbindungsabschnittes 4 zur Mittenachse M gewinkelt ist. Dies hat zur Folge, dass in diesem Ausführungsbeispiel zwischen dem Verbindungsabschnitt4 und dem Ventilabschnitt 24a ein Winkelabschnitt44 angeordnet ist. In anderen Ausführungsbeispielen ist die Längsachse des Verbindungsabschnittes konzentrisch mit der Mittenachse M ausgerichtet, so dass in diesen Ausführungsbeispielen der Winkelabschnitt 44 entfällt.

Es ist bevorzugt, dass ein Innendurchmesser des Verbindungsabschnittes 4 kleiner ist als ein Innendurchmesser des Ventilabschnittes 24a. Vorzugsweise ist ein Innendurchmesserdes Ventilabschnittes 24a kleiner als ein Innendurchmesser des Dichtungsabschnittes 34. Es ist bevorzugt, dass ein Innendurchmesser des Dichtungsabschnittes 34 kleiner ist als ein Innendurchmesser des Kupplungsabschnittes 6.

In Fig. 4 ist der Kupplungsstecker 2 perspektivisch abgebildet. Demzufolge umfasst der Kupplungsstecker 2 einen Steckerkörper 14, welcher in diesem Ausführungsbeispiel per Spritzguss integral und damit zugleich auch einstückig hergestellt wurde. Der Steckerkörper 14 umfasst einen Anschlussabschnitt 15 zum Anschluss an ein in Fig. 4 nicht dargestelltes, weiteres Rohr. Der Anschlussabschnitt 15 dieses Ausführungsbeispieles istdazu ausgebildet, dass das weitere Rohr auf den Anschlussabschnitt 15 aufgesteckt werden kann. In anderen Ausführungsbeispielen kann der Anschlussabschnitt so ausgestaltet sein, dass in diesen das weitere Rohr eingesteckt und beispielsweise darin verschweißt werden kann. Die Verschweißung mag beispielsweise mittels Laserschweißen oder Reibschweißen vonstattengehen. Der Steckerkörper 14 umfasst erfindungsgemäß eine Kuppelfläche 45, welche radial komplementär zur Dichtung 32 der Kupplungsbuchse 1 ausgebildet ist. An einem axial auswärtigen Ende des Steckerkörpers 14 mag die Kuppelfläche 45 sich in axial auswärtiger Richtung zur besseren Einführbarkeit in die Kupplungsbuchse 1 verjüngen. Eine am axial auswärtigen Ende des Kupplungssteckers 2 befindliche Stirnwand bildet eine Kuppelöffnung 19.

Zwischen dem Anschlussabschnitt 15 und der Kuppelfläche 45 befindetsich ein Mittelabschnitt 30, wie dies insbesondere aus Fig. 5 hervorgeht. In diesem Ausführungsbeispiel wird der Mittelabschnitt 30 durch einen Flansch 16 definiert, welcher insbesondere als Anschlag für das weitere, hier nicht dargestellte Rohr dienen mag. Auf dem Flansch 16 sind bei diesem Ausführungsbeispiel die beiden bereits erwähnten Sicherungsteile 29 diametral zueinander angeordnet, um in die Sicherheitselemente 28 der Kupplungsbuchse 1 zwecks Verdrehsicherung eingreifen zu können. In axial auswärtiger Richtung folgt auf die Sicherungsteile 29 mit Vorteil ein sich konisch verjüngender Abschnitt, welcher teilweise dem Mittelabschnitt 30 und teilweise einem Ventilabschnitt 24b zuzuordnen ist. Im Falle des Kupplungssteckers 2 wird vorzugsweise der Ventilabschnitt 24b durch die axiale Ausdehnung definiert, welche von starren Elementen 11b, 13b eines Steckerventils 10b aufgespannt wird.

Das Steckerventil 10b ist in diesem Ausführungsbeispiel identisch zu dem Buchsenventil 10a ausgebildet, so dass die einzelnen Elemente des Steckerventils 10b auf identische Weise wie diejenigen Elemente des Buchsenventils 10a benannt sind. Das Bezugszeichenkürzel "b" weist stets Ventilelemente des Kupplungssteckers2 aus, während das Bezugszeichenkürzel "a" für Ventilelemente der Kupplungsbuchse 1 vorbehalten ist. Der Aufbau und die Funktionsweise des Steckerventils 10b sind vorzugsweise dieselben wie im Falle des Buchsenventils 10a, so dass die Beschreibung zu dem Buchsenventil 10a in analoger Weise auf das Steckerventil 10b anzuwenden ist.

Ein der Kuppelfläche 45 bzw. des Ventilabschnittes 24b zugeordneter axialer Abschnitt des Steckerkörpers 2 weist eine Mittelachse A auf, welche eine axiale Richtung, eine radiale Richtung sowie eine Umlaufrichtung dieses axialen Abschnittes definiert. In diesem Ausführungsbeispiel ist der Kupplungsstecker 2 gerade ausgeführt, so dass eine Längsachse des Anschlussabschnittes 15 identisch ist zu der Mittelachse A des Ventilabschnittes 24b. In anderen Ausführungsbeispielen mag der Anschlussabschnitt 15 bzw. dessen Längsachse gewinkelt zu der Mittelachse A ausgerichtet sein.

Die Kuppelöffnung 19 bzw. der Ventilabschnitt 24b ist über einen Fluidkanal 18 fluidisch mit dem Anschlussabschnitt 15 verbunden. Vorzugsweise ist ein Innendurchmesser des Anschlussabschnittes 15 kleiner als ein Innendurchmesser des Ventilabschnittes 24. Bevorzugtermaßen ist ein Innendurchmesser des Mittelabschnittes 30 kleiner als der Innendurchmesser des Ventilabschnittes 24b und vorzugsweise größer als der Innendurchmesser des Anschlussabschnittes 15.

Der Kupplungsstecker 2 weist gemäß Fig. 4 wenigstens ein Verriegelungselement 17 und vorzugsweise zwei Verriegelungselemente 17 auf. Mit Vorteil ist das Verriegelungselement 17 bzw. sind die Verriegelungselemente 17 als Nuten auf der Außenseite des Steckerkörpers 2 ausgebildet, in welche die Rastelemente 25 des Rückhalters 7 der Kupplungsbuchse 1 eingreifen. Es ist bevorzugt, dass der konische Abschnitt des Steckerkörpers 14 dazu ausgebildet ist, die Rastelemente 25 des Rückhalters 7 beim Einführen des Kupplungssteckers 2 zunehmend aufzuspreizen, bis die Schenkel 25 in den Verriegelungselementen 17 verrasten, wodurch eine Verriegelung des Kupplungssteckers 2 in der Kupplungsbuchse 1 erreicht wird.

Die Verriegelung des Kupplungssteckers 2 in der Kupplungsbuchse 1 ist in Fig. 6 dargestellt, wobei allerdings die Rastelemente 25 in der in Fig. 6 gewählten Perspektive nicht ersichtlich sind. Allerdings verdeutlicht dort die Basis 26 des Rückhalters 7 die axiale Position der Rastelemente 25. In dieser Figur ist zu sehen, dass die Sicherungsteile 29 des Kupplungssteckers 2 in den Sicherungselementen 28 der Kupplungsbuchse 1 befindlich sind. Gleichzeitig liegt die Dichtung 32 auf der Kuppelfläche 45 kraftschlüssig an. Die Fig. 6 zeigt daher einen verriegelten Zustand einer aus der Kupplungsbuchse 1 und dem Kupplungsstecker 2 bestehenden Kupplungsanordnung 1, 2.

In Fig. 6 ist hervorgehoben, dass die Druckflächen 23a und 23b aneinander anliegen, wodurch die Ventilkörper 12a und 12b jeweils nach axial einwärts bewegt wurden und in diesem Ausführungsbeispiel jeweils an der Ventilhalterung 11a bzw. 11b anliegen. Gleichermaßen wurde die jeweilige Ventilführung 20a bzw. 20b weiter in die jeweils axial einwärtige Richtung gedrückt, so dass die Ventilführungen 20a und 20b mit ihren Führungsfüßen 37a und 37b in jeweils axial einwärtiger Richtung gegenüber der jeweiligen Ventilhalterung 11a bzw. 11b hervorstehen. Hierdurch wurden die beiden Rückstellelemente 21a und 21b gleichermaßen komprimiert, so dass in beiden Rückstellelementen 21a und 21b etwa dieselbe Rückstellenergie gespeichert wurde.

Aufgrund des gegenseitigen Anschlages der beiden Ventilkörper 12a und 12b aneinander haben sich beide Ventilkörper 12a und 12b von dem jeweiligen Ventilsitz 13a bzw. 13b gelöst, so dass das Fluid in beide Richtungen strömen kann. Die Kupplungsanordnung 1, 2 ist folglich so ausgebildet, dass gleichzeitig mit der mechanischen Verriegelung durch den Rückhalter 7 eine fluidische Öffnung beider Ventile 10a und 10b stattfindet. Wird nun umgekehrt die Kupplungsanordnung 1, 2 gelöst und der Kupplungsstecker 2 aus der Kupplungsbuchse 1 gezogen, so schließen sich beide Ventile 10a und 10b automatisch, so dass die Kupplungsanordnung 1, 2 -ohne vorheriges Leeren der Fluidleitung - praktisch ohne Fluidverlust gelöst werden kann.

Im Betrieb und damit im verbundenen Zustand der Kupplungsanordnung 1, 2 strömt das Fluid je nach Anwendungsfall vom Kupplungsstecker 2 zur Kupplungsbuchse 1 oder umgekehrt. Dabei fließt es durch die Fenster40a, 40b der beiden Ventilhalterungen 11a, 11b und durch die Öffnungen der beiden Ventilsitze 13a, 13b. Die sich in axialer Richtung aufweitenden bzw. verjüngenden Abschnitte der Ventilkörper 12a, 12b sorgen dafür, dass das Fluid mit möglichst geringem Strömungswiderstand an den Ventilkörpern 12a, 12b vorbeifließen kann. Wären die Ventilkörper beispielsweise im Längsschnitt etwa rechteckig ausgebildet, so träfe das Fluid auf senkrechte Wände, die selbst im geöffneten Zustand der Ventile 10a, 10b erhebliche Wirbel und damit Strömungswiderstände verursachen würden. In anderen, hier nicht dargestellten Ausführungsbeispielen können die Konturen der Ventilkörper 12a, 12b im Längsschnitt gerundet ausgebildet sein, wodurch sich die Turbulenzen noch weiter verringern lassen.

Vorteilhafterweise sind auch noch weitere Komponenten der Kupplungsanordnung so ausgestaltet, dass sie den durch die Ventile 10a, 10b selbst erzeugten Strömungswiderstand etwas verringern. Es ist sehr bevorzugt, dass eine axial einwärtige Stirnwand der Ventilführungen 20a, 20b sich im Längsschnittin jeweils axial einwärtiger Richtung verjüngt. Vorzugsweise ist die axial einwärtige Stirnwand der Ventilführung 20a, 20b im Längsschnitt gerundet ausgebildet. Ganz besonders bevorzugt fluchtet die axial einwärtige Stirnwand der Ventilführungen 20a, 20b im geöffneten Zustand des jeweiligen Ventils 10a, 10b mit der jeweiligen Ventilhalterung 11a, 11b. Es ist bevorzugt, dass der Mittelabschnitt 30 des Kupplungssteckers 2 einen konischen Abschnitt auf der dem Fluidkanal 18 zugewandten Innenseite aufweist. Es ist bevorzugt, dass der konische Abschnitt eine axiale Ausdehnung aufweist, welche wenigstens einem Drittel und vorzugsweise wenigstens einer Hälfte der axialen Länge des Mittelabschnittes 30 entspricht.

### Bezugszeichenliste:

| **B.Z** | **Bezeichnung** | **B.Z** | **Bezeichnung** |
|---|---|---|---|
| 1 | Kupplungsbuchse | 17 | Verriegelungselement von 2 |
| 2 | Kupplungsstecker | 18 | Fluidkanal von 2 |
| 3 | Buchsenkörper | 19 | Kuppelöffnung von 2 |
| 4 | Verbindungsabschnitt von 1,3 | 20a | Ventilführung von 10a, 10b |
| | | 20b | |
| 5 | Rohr | 21a | Rückstellelement von 10a, 10b |
| | | 21b | |
| 6 | Kupplungsabschnitt von 1,3 | 22a | Dichtfläche von 12a, 12b |
| | | 22b | |
| 7 | Rückhalter von 1 | 23a | Druckfläche von 12a, 12b |
| | | 23b | |
| 8 | Innenkanal von 1,3 | 24a | Ventilabschnitt von 3, 14 |
| | | 24b | |
| 9 | Kupplungsöffnung von 1,3 | 25 | Rastelement von 7 |
| 10a | Buchsenventil von 1 | 26 | Basis von 7 |
| 10b | Steckerventil von 2 | | |
| 11a | Ventilhalterung von 10a, 10b | 27 | Aussparung von 3 |
| 11b | | | |
| 12a | Ventilkörper von 10a, 10b | 28 | Sicherungselement von 1 |
| 12b | | | |
| 13a | Ventilsitz von 10a, 10b | 29 | Sicherungsteil von 2 |
| 13b | | | |
| 14 | Steckerkörper | 30 | Mittelabschnitt von 2 |
| 15 | Anschlussabschnitt von 2 | 31 | Schenkelaufnahme von 1 für 25 |
| 16 | Flansch von 2 | 32 | Dichtung von 1 |

| **B.Z** | **Bezeichnung** | **B.Z.** | **Bezeichnung** |
|---|---|---|---|
| 33 | Dichtungshalter von 1 | M | Mittenachse von 1 |
| 34 | Dichtungsabschnitt von 1 | A | Mittelachse von 2 |
| 35a | Führungsaufnahme von 12a, 12b | | |
| 35b | | | |
| 36a | Führungskopf von 20a, 20b | | |
| 36b | | | |
| 37a | Führungsfuß von 20a, 20b | | |
| 37b | | | |
| 38a | Führungsdurchgang von 11a, 11b | | |
| 38b | | | |
| 39a | Strebe von 11a, 11b | | |
| 39b | | | |
| 40a | Fenster von 11a, 11b | | |
| 40b | | | |
| 41a | Ring von 11a, 11b | | |
| 41b | | | |
| 42a | Rückseite von 12a, 12b | | |
| 42b | | | |
| 43a | Vorsprung von 3, 14 für 11a, 11b | | |
| 43b | | | |
| 44 | Win kelabsch n itt von 3 | | |
| 45 | Kuppelfläche von 2 | | |
| 46 | Flansch von 1 | | |
| 47a | Protrusion von 3, 14 für 13a, 13b | | |
| 47b | | | |

## Patentansprüche

1. Kupplungsbuchse (1) zur fluidischen Kupplung mit einem Kupplungsstecker (2), wobei die Kupplungsbuchse (1) einen Buchsenkörper (3) umfasst, wobei der Buchsenkörper (3) einen Verbindungsabschnitt (4) zur Verbindung mit einem Rohr (5) oder mit einem Aggregat und einen Kupplungsabschnitt (6) zur Kupplung mit einem Kupplungsstecker (2) umfasst, wobei die Kupplungsbuchse (1) so ausgebildet ist, dass ein Kupplungsstecker (2) in die Kupplungsbuchse (1) einsteckbar ist,
wobei die Kupplungsbuchse (1) einen Rückhalter (7) zur Verriegelung eines Kupplungssteckers (2) in dem Buchsenkörper (3) aufweist, wobei der Kupplungsabschnitt (6) und der Verbindungsabschnitt (4) des Buchsenkörpers (3) über einen Innenkanal (8) miteinander fluidisch verbunden sind, wobei der dem Kupplungsabschnitt (6) zugeordnete Abschnitt des Innenkanals (8) in einem Längsschnitt der Kupplungsbuchse (1) eine Mittenachse (M) sowie eine axiale und eine radiale Richtung sowie eine Umlaufrichtung definiert, wobei der Kupplungsabschnitt (6) in axial auswärtiger Richtung von einer Kupplungsöffnung (9) abgeschlossen wird,
wobei in dem Innenkanal (8) ein Buchsenventil (10a) angeordnet ist, wobei das Buchsenventil (10a) eine Ventilhalterung (11a), einen axial beweglichen Ventilkörper (12a) und einen Ventilsitz (13a) umfasst, wobei die Ventilhalterung (11a) und der Ventilsitz (13a) in axialer Richtung einen Ventilabschnitt (24a) des Buchsenkörpers (3) bzw. der Kupplungsbuchse (1) definieren, wobei die Kupplungsbuchse (1) so ausgebildet ist, dass der Ventilkörper (12a) in einem gesperrten Zustand des Buchsenventils (10a) an dem Ventilsitz (13a) fluiddicht anliegtund in einem geöffneten Zustand des Buchsenventils (10a) nichtan dem Ventilsitz (13a) anliegt,
**dadurch gekennzeichnet, dass**
der Rückhalter (7) wenigstens ein Rastelement (25) umfasst, wobei das wenigstens eine Rastelement (25) federnd elastisch ausgebildet ist, wobei das wenigstens eine Rastelement (25) für einen Eingriff mit einem Kupplungsstecker (2) ausgebildet ist.

2. Kupplungsbuchse (1) nach Anspruch 1, wobei die Kupplungsbuchse (1) so ausgebildet ist, dass die Ventilhalterung (11a) und/oder der Ventilkörper (12a) und/oder der Ventilsitz (13a) in axial einwärtiger Richtung in den Buchsenkörper (3) einsetzbar bzw. eingesetzt ist/sind.

3. Kupplungsbuchse (1) nach einem der Ansprüche 1 oder 2, wobei der Buchsenkörper (3) einen radial nach innen ragenden Vorsprung (43a) aufweist, an welchem die Ventilhalterung (11a) angeschlossen bzw. befestigt ist.

4. Kupplungsbuchse (1) nach einem der Ansprüche 1 bis 3, wobei der Ventilsitz (13a) ein separat von dem Buchsenkörper (3) hergestelltes Bauteil ist.

5. Kupplungsbuchse (1) nach einem der Ansprüche 1 bis 4, wobei ein Innendurchmesser des Verbindungsabschnittes (4) kleiner ist als ein Innendurchmesser des Ventilabschnittes (24a).

6. Kupplungsbuchse (1) nach einem der Ansprüche 1 bis 5, wobei der Ventilkörper (12a) im Längsschnitt einen sich in axial auswärtiger Richtung aufweitenden Abschnitt und einen sich in axial auswärtiger Richtung verjüngenden Abschnitt umfasst.

7. Kupplungsbuchse (1) nach einem der Ansprüche 1 bis 6, wobei das Buchsenventil (10a) ein Rückstellelement (21a) umfasst, wobei das Rückstellelement (21a) auf den Ventilkörper (12a) vorzugsweise in Richtung des Ventilsitzes (13a) eine Kraft ausübt.

8. Kupplungsbuchse (1) nach einem der Ansprüche 1 bis 7, wobei das Buchsenventil (10a) eine Ventilführung (20a) aufweist, wobei die Ventilführung (20a) die Bewegungsrichtung des Ventilkörpers (12a) definiert, wobei der Ventilkörper(12a) die Ventilführung (20a)wenigstens axial abschnittsweise in radialer Richtung wenigstens teilweise umschließt.

9. Kupplungsbuchse (1) nach einem der Ansprüche 1 bis 8, wobei der Ventilkörper (12a) ein axial auswärtiges Stirnende aufweist, wobei das axial auswärtige Stirnende vorzugsweise eine ebene Druckfläche (23a) umfasst, wobei die ebene Druckfläche (23a)sich bevorzugt in einer senkrecht zur Mittenachse (M) stehenden Ebene befindet.

10. Kupplungsbuchse (1) nach einem der Ansprüche 1 bis 9, wobei die axiale Position des Ventilkörpers (12a) im gesperrten Zustand des Buchsenventils (10a) gegenüber der axialen Position des Ventilkörpers (12a) im geöffneten Zustand des Buchsenventils (10a) axial weiter auswärts befindlich ist.

11. Fluidleitung, umfassend eine Kupplungsbuchse (1) nach einem der Ansprüche 1 bis 10 sowie ein Rohr (5).

12. Kupplungsstecker (2) zur fluidischen Kupplung mit einer Kupplungsbuchse (1), insbesondere mit einer Kupplungsbuchse (1) nach einem der Ansprüche 1 bis 11, wobei der Kupplungsstecker (2) einen Steckerkörper (14) umfasst, wobei der Steckerkörper (14) einen Anschlussabschnitt (15) zum Anschluss an ein Rohr(5)oder an ein Aggregat und eine Kuppelfläche (45)zur Kupplung mit einer Kupplungsbuchse (1) umfasst, wobei der Kupplungsstecker (2) so ausgebildet ist, dass eine Kupplungsbuchse (1) auf den Kupplungsstecker (2) aufsteckbar ist,
wobei der Kupplungsstecker(2) ein Verriegelungselement(17)zur Verriegelung des Kupplungssteckers (2) in einer Kupplungsbuchse (1) aufweist, wobei der der Kuppelfläche (45) zugeordnete axiale Abschnitt der Steckerkörpers (14) und der Anschlussabschnitt (15) über einen Fluidkanal (18) miteinander fluidisch verbunden sind, wobei der der Kuppelfläche (45) zugeordnete Abschnitt des Fluidkanals (18) in einem Längsschnitt des Kupplungssteckers (2) eine Mittelachse (A) sowie eine axiale und eine radiale Richtung sowie eine Umlaufrichtung definiert, wobei die Kuppelfläche (45) in axial auswärtiger Richtung von einer Kuppelöffnung (19) abgeschlossen wird,
wobei in dem Fluidkanal (18) ein Steckerventil (10b) angeordnet ist, wobei das Steckerventil (10b) eine Ventilhalterung (11b), einen axial beweglichen Ventilkörper (12b) und einen Ventilsitz (13b) umfasst, wobei die Ventilhalterung (11b) und der Ventilsitz (13b) in axialer Richtung einen Ventilabschnitt (24b) des Steckerkörpers (14) bzw. des Kupplungssteckers (2) definieren, wobei der Kupplungsstecker (2) so ausgebildet ist, dass der Ventilkörper (12b) in einem gesperrten Zustand des Steckerventils (10b) an dem Ventilsitz (13b) fluiddicht anliegtund in einem geöffneten Zustand des Steckerventils (10b) nicht an dem Ventilsitz (13b) anliegt.

13. Verfahren zum Verbinden einer Kupplungsbuchse (1) und eines Kupplungssteckers (2) einer Kupplungsanordnung (1, 2), umfassend eine Kupplungsbuchse (1) und einen Kupplungsstecker (2), wobei die Kupplungsbuchse (1) vorzugsweise nach einem der Ansprüche 1 bis 11 ausgebildet ist, wobei der Kupplungsstecker (2) vorzugsweise nach Anspruch 12 ausgebildet ist, wobei der Kupplungsstecker (2) komplementär zur Kupplungsbuchse (1) ausgebildet und fluiddicht in die Kupplungsbuchse (1) einsteckbar ist, wobei die Kupplungsanordnung (1, 2) so ausgebildet ist, dass der Kupplungsstecker (2) in der Kupplungsbuchse (1) lösbar fixiert werden kann,
wobei die Kupplungsbuchse (1) ein Buchsenventil (10a) und der Kupplungsstecker (2) ein Steckerventil (10b) aufweist, wobei die Kupplungsanordnung (1, 2) so ausgebildet ist, dass bei einem Einstecken des Kupplungssteckers (2) in die Kupplungsbuchse (1) das Buchsenventil (10a) und das Steckerventil (10b) jeweils von einem gesperrten Zustand in einen geöffneten Zustand überführt werden.

14. Verfahren nach Anspruch 13, wobei die Kupplungsanordnung (1, 2)so ausgebildet ist, dass das Steckerventil (10b) beim Einführen des Kupplungssteckers (2) in die Kupplungsbuchse (1) an dem Buchsenventil (10a)anschlägt, so dass das Steckerventil (10b) und das Buchsenventil (10a)einander axial einwärts drücken.

15. Verwendung einer Kupplungsbuchse (1) nach einem der Ansprüche 1 bis 11 und/oder einesKupplungssteckers (2) nach Anspruch 12 in einem Fahrzeug und insbesondere in einem Elektrofahrzeug, vorzugsweise zur fluidischen Kühlung und besonders vorzugsweise zur fluidischen Kühlung eines Akkus eines Elektrofahrzeuges.
